# EUROPEAN PATENT SPECIFICATION

(11) **EP 1 425 566 B1**
(45) Date of publication and mention of the grant of the patent: **25.11.2009**
(21) Application number: 02763157.1
(22) Date of filing: 28.08.2002
(51) Int. Cl.: G01N 1/40

(54) **METHOD AND APPARATUS FOR SAMPLE PREPARATION USING SOLID PHASE MICROEXTRACTION**
VERFAHREN UND VORRICHTUNG ZUR PROBENVORBEREITUNG MIT FESTPHASEN-MIKROEXTRAKTION
PROCEDE ET APPAREIL DE PREPARATION D'UN ECHANTILLON PAR MICROEXTRACTION SUR PHASE SOLIDE

(30) Priority: 31.08.2001 SE 0102922
(43) Date of publication of application: 09.06.2004
(73) Proprietor: SGE Analytical Science Pty Ltd, Ringwood VIC 3134 (AU)
(72) Inventor: ABDEL-REHIM, Mohamed, S-151 85 Södertälje (SE)
(74) Representative: Hamer, Christopher K.
(86) International application number: PCT/SE2002/001543
(87) International publication number: WO 2003/019149

(56) References cited:
- US-A- 5 565 622
- US-A- 6 164 144

## Description

### Field of the invention

The present invention relates to a method for performing on-line sample preparation using solid phase microextraction (SPME) onto a solid phase material within a syringe. The invention also relates to an apparatus for performing the sample preparation using solid phase microextraction.

### Background of the invention

There is a growing realisation that faster and more efficient methods for sample pre-treatment are essential. One study showed that more than 60% of analysis time was spent in sample preparation, compared to only about 7% for actual measurement of the sample constituents. Solid phase extraction (SPE) and solid phase microextraction (SPME) are particularly attractive techniques for isolation and pre-concentration of target analytes in which very little chemical waste is produced. SPE and SPME are rapidly replacing older liquid-liquid extraction (LLE) procedures of chemical analysis.

The most significant difference between SPE and SPME lies in the fact that whereas SPE is an exhaustive extraction, i.e. the goal is to extract as near as possible to 100% of the analytes from a sample, SPME is an equilibrium extraction. Once sufficient extraction time has elapsed for the equilibrium to be established, further increases in extraction time do not affect the amount of analyte extracted. When extraction time does not impact on the results, the extraction technique is simplified and precision is improved.

In the review article "Evolution of solid-phase microextraction technology" by H. Lord and J. Pawliszyn several implementations of SPME are illustrated. The traditional approach to SPME involves coated fibers, for example, a fiber that is mounted within a hollow needle of a syringe. The fiber, for example a fused silica fiber coated with an adsorbent or a stationary phase, acts as a "sponge" to extract a sample to concentrate the organic analytes on its surface so that it can be transferred onto the heated injector of a gas chromatograph for analysis. However, there are several disadvantages of SPME using coated fibers such as that the fibers become unstable in complex matrixes such as plasma or urine. Further, samples in organic solvents can not be used as the coating on the fibers can dissolve in organic solvents. Also, the SPME coating must have a high thermal stability otherwise it cannot be used as a stationary phase. Another disadvantage with the fiber solid phase microextraction is that the recovery is very low, only somewhere between 0.5-10%, and therefore sensitivity is low. Further, long absorption times, up to 60 minutes or more and long desorption times, up to 5 minutes are needed for extracted solutes and that will prolong the total sample analysis time.

In US 6,164,144 another implementation of the SPME technique is disclosed wherein the inner surface of a syringe needle is coated with a stationary phase for carrying out SPME. The method comprises initially contacting the coated inner surface of the hollow needle with a sample containing the analytes for a sufficient time to allow their microextraction and then placing the needle into an injection port of a chromatographic instrument and flowing a carrier gas through the fluid communication means to assist in the desorption of the analytes from the coated surface into the injection port. A disadvantage of the technique described in US 6,164,144 is that the coating must have a high thermal stability otherwise it cannot be used as a stationary phase. Also, there is a risk to get a memory effect in the stationary phase that will make it difficult to perform quantitative analysis. Further, this technique cannot be applied to a liquid chromatograph (LC) as a heated gas is used to flush the adsorbed analytes, which limits the use of analysis instruments to gas chromatographs (GC).

In cases where the analytes are present in a complex matrix, e.g. plasma, urine or samples of environmental origin, the sample preparation is of crucial importance for the analysis. The purpose of the sample preparation is to remove any interfering substances and also to enrich the analytes. The procedure must be highly reproducible with a high recovery of the target analytes. Further, an ideal sample preparation method should involve a minimum number of working steps and it should therefore be fully automated.

### Summary of the invention

It is an aim of the present invention to provide an improved method and apparatus for sample preparation using solid phase microextraction where the solid phase material is provided inside a syringe barrel - a so called packed syringe. With this configuration the problem of the unstableness in the solid phase material of the coated fiber and that the coated fiber is easily damaged are avoided.

It is a further aim of the present invention to provide a method and apparatus for sample preparation in which the extraction recovery is higher than with previous methods and apparatuses. In this way, even small sample volumes can be treated.

A still further aim of the present invention is to provide a method and apparatus that can be used for analysing a sample using gas chromatography (GC), liquid chromatography (LC) or capillary electro chromatography (CEC).

A still further aim of the present invention is to provide a fully automated method and apparatus for sample preparation that consumes a very short time, i.e. 1 to 2 minutes for the treatment of each sample.

According to a first aspect of the invention there is provided a method for performing sample preparation of a liquid sample using solid phase microextraction comprising the steps of:
- drawing a liquid sample comprising analytes into a syringe having a syringe barrel provided with a solid support phase,
- passing the liquid sample through the solid support phase such that the analytes are adsorbed to the solid support phase; and
- eluting the analytes with a solvent directly into the injector of an anlysing instrument.

Preferably, the sample is drawn into the syringe using an autosampler.

Normally the adsorbed analytes are eluted directly into the analysing equipment, but if necessary, the solid support phase may be washed prior to the eluting step. Normally a washing step will be needed if the sample is drawn from a complex matrix such as plasma. The washing step is carried out using water as washing liquid.

Preferably, the analytes are eluted with an organic solvent such as methanol.

The present invention also provides an apparatus for performing sample preparation of a liquid sample using solid phase microextraction comprising a syringe having a syringe barrel with a plunger slidable within the barrel and a hollow needle extending from the barrel through which needle the liquid sample is drawn into the barrel wherein a solid phase material is provided in the syringe barrel to be contacted by the liquid sample drawn into the syringe.

Preferably, the solid phase material is provided as a porous plug inside the syringe barrel.

In another embodiment the solid phase material is provided as a coating on the inside of the syringe barrel wall.

In a further embodiment, the solid phase material is represented as a coating on a filter that is provided inside the syringe barrel.

In still a further embodiment a thin membrane made of solid phase material is provided inside the syringe barrel.

Preferably, the solid phase material is made of a solid polymer.

Preferably, the solid phase material is made of a liquid polymer.

The invention will allow for fast sample preparation with a high recovery of the target analytes. Further, this method and apparatus for sample preparation involve a minimum number of working steps and it is fully automated.

The main advantages of the present invention are that a fast sample preparation with high recovery is obtained and that it can be applied for both gas chromatography (GC) liquid chromatography (LC) and capillary electro chromatography (CEC).

A further advantage of the present invention is that the packed syringe, i.e. the syringe provided with the solid phase material, can be used several times, as much as up to a hundred times. This is possible as the solid phase material provided inside the syringe barrel can be easily and effectively cleaned.

### Description of the drawings

The above and other features and advantages of the invention are defined in the claims and described in greater detail below with reference to the accompanying drawings, which illustrate preferred embodiments.
Figure 1 illustrates a syringe provided with a solid phase material for performing a sample preparation according to the present invention.
Figures 2a -2b illustrate further embodiments of the syringe according to Figure 1.
Figure 3 illustrates the syringe of Fig. 1 connected to an autosampler for drawing a liquid sample.
Figure 4 illustrates the syringe of Fig. 1 connected to an autosampler for eluting analytes into an analysing instrument.

### Description of preferred embodiments

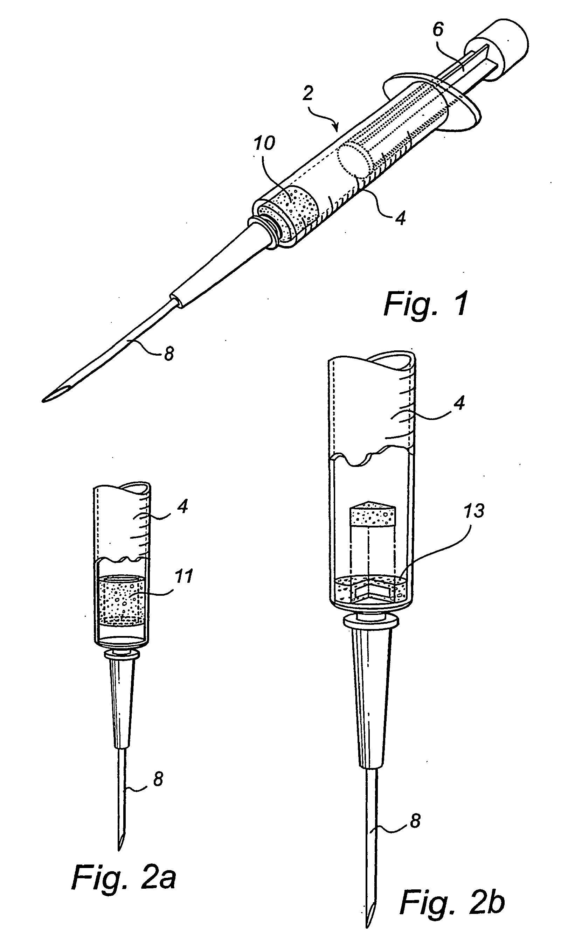

Figure 1 illustrates a syringe 2 provided with a solid phase material 10 used for preparation of a sample from a liquid sample containing analytes. The syringe comprises a barrel 4, a plunger 6 and a needle 8. The needle was fixed to have a larger inside diameter to make it possible to also handle semi-solid samples such as gels or colloids. In a preferred embodiment, the solid phase material is provided inside the syringe as a porous plug 10. Typically, the syringe is a 100-250 µl syringe. For a 250 µl syringe, preferably 1-2 mg of solid phase material is used to form the plug of approximately 3-mm in length and introduced into the syringe barrel. The solid phase material preferably consists of a silica-based material, a molecular imprinting polymer, polydimethylsiloxane or polystyrene-divinylbenzene.

In another embodiment shown in Figure 2a the inside wall of the syringe barrel is coated 11 with the solid phase material instead of it being provided as a porous plug. The coating 11 on the inside of the barrel extends 1-2 cm starting from the syringe needle.

In a further embodiment illustrated in Figure 2b the solid phase material is provided as a coating on a filter material. The coated filter material 13 is provided inside the syringe barrel as a thin disc. This embodiment has been proven to be useful when only small sample volumes are available. Instead of coating a filter, a thin membrane may be formed of the solid phase material to be used in tha same manner as the coated filter.

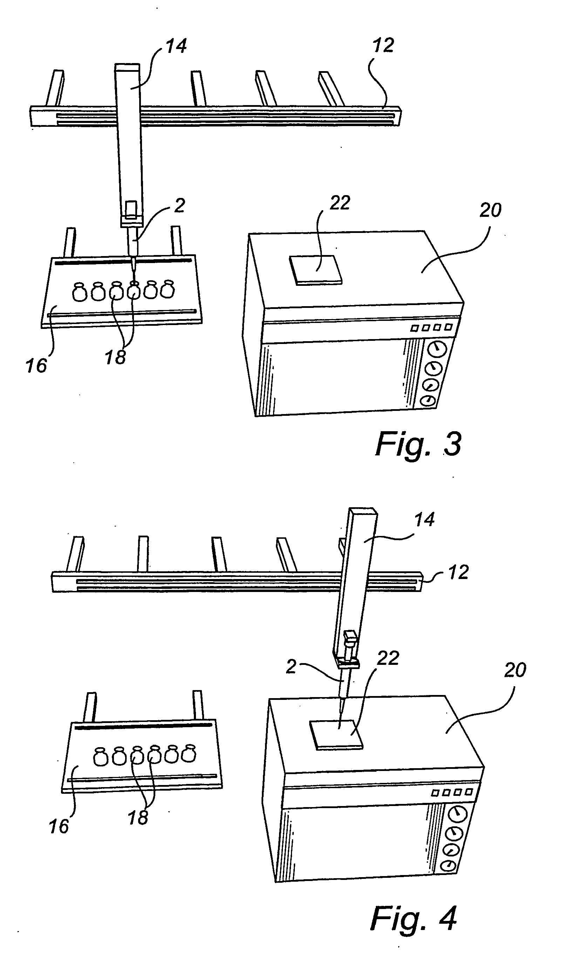

Turning now to Fig 3 and 4 illustrating the syringe 2 positioned in an autosampler 12 for carrying out the sample preparation. In Fig. 3, a sample is drawn by the autosampler from a bottle or container 18 on a sample tray 16 through the syringe needle 8 to the barrel 4 of the syringe. Between 10-250 µl may be drawn into the syringe, however, 50 µl is a preferred volume to draw into the syringe. When the liquid sample has passed through the solid phase material 10 the analytes have been adsorbed to the solid phase. Normally, it will be sufficient to let the liquid sample pass the solid phase material only once. However, if necessary the liquid sample may be flushed through the solid phase material a couple of times until the analytes have been adsorbed to the solid phase.

Before the eluting step it might be necessary to remove proteins or other interfering substances from the sample. Particularly, if the sample is not in an aqueous solution the analytes need to be washed before the eluting step. The solid phase material is then washed once with water, approximately 50-100 µl, to remove any adsorbed interfering substances.

In Fig. 4, the arm 14 of the autosampler 12 has moved the syringe 2 close to the inlet port 22 of an analysing instrument 20 such as a gas chromatograph (GC) a liquid chromatograph (LC) or a capillary electro chromatograph (CEC). An organic solvent, preferably methanol in an amount of approximately 50 µl, is used to elute the analytes just before the syringe 2 is moved to the inlet port 22 of the analysing instrument 20. If a large number of samples should be prepared, i.e. more than 100, several syringes can be mounted on the autosampler arm 14. Thus, a casette carrying 2-5 syringes can be mounted on the arm.

Using the sample preparation technique according to the invention small sample volumes from 10 µl can be treated as well as large volumes up to 1000 µl. Also, a high extraction recovery of 99-100% can be obtained. Normally, using fiber SPME the extraction recovery is somewhere between 1-10%.

After the sample has been eluted the solid phase material provided inside the syringe barrel can be easily and effectively cleaned by drawing up an organic phase such as methanol or acetone though the solid phase material a couple of times (5-7 times).

A study has been performed comparing the sample preparation method using the Packed Syringe according to the invention to other sample preparation methods such as Liquid-Liquid Extraction (LLE), Solid Phase Extraction (SPE) and Fiber Solid Phase Microextraction. The results from that study are presented in the table below.

| **Method** | **Ropivacaine (µM)** | **Accuracy** **%** | **Precision (RSD %)** **(Inter-day)** | **Reference** |
|---|---|---|---|---|
| **Packed Syringe** / **GC/MS** | 0.15 | 105 | 7.0 | |
| **Packed Syringe / GC/MS** | 0.75 | 101 | 3.0 | |
| | | | | |
| **LLE / GC-NPD** | 0.10 | 96 | 5.7 | [1] |
| **LLE / GC-MS** | 0.04 | 101 | 3.8 | |
| | | | | |
| **SPE / LC-UV** | 1.90 | 101 | 3.0 | [2] |
| | | | | |
| **Fiber SPME / GC-NPD** | 0.16 | 98 | 17.1 | [3] |
| **Fiber SPME / GC-MS** | 0.08 | 110 | 6.3 | |

| | | | | |
|---|---|---|---|---|
| [1] M. Engman, P. Neidenström, C. Norsten-Höög, S-J. Wiklund, U. Bondesson, T. Arvidsson, J. Chromatogr. B 709 (1998) 57-67. [2] T. Arvidsson, Y. Askemark, M. Halldin, Biomed. Chromatogr. 13 (1999) 286-292. [3] M. Abdel-Rehim, M. Andersson, E. Portelius , C. Norsten-Höög and L. G. Blomberg, J. Pharm. Biomed. Anal., Submitted. GC - Gas Chromatography LC - Liquid Chromatography UV - Ultraviolet detection MS - Mass Spectrometry NPD - Nitrogen Phosphorus Detector | | | | |

The foregoing is a disclosure of preferred embodiments for practicing the present invention. However, it is apparent that device incorporating modifications and variations will be obvious to one skilled in the art. Inasmuch as the foregoing disclosure is intended to enable one skilled in the art to practice the instant invention, it should not be construed to be limited thereby, but should be construed to include such modifications and variations as fall within the scope of the invention as defined by the claims.

## Claims

1. A method for performing sample preparation of a liquid sample using solid phase microextraction comprising the steps of:
- drawing a liquid sample comprising analytes into a syringe (2) having a syringe barrel (4) provided with a solid phase material (10),
- passing the liquid sample through the solid phase material (10) such that the analytes in the sample are adsorbed to the solid phase material; and
- eluting the analytes with a liquid solvent directly into the injector (22) of an anlysing instrument (20).

2. Method according to claim 1 wherein the sample is drawn into the syringe (2) using an autosampler (12).

3. Method according to claim 1 wherein the solid phase material (10) is washed prior to the eluting step.

4. Method according to claim 1 wherein the analytes are eluted with an organic solvent.

5. An apparatus for performing sample preparation of a liquid sample using solid phase microextraction comprising a syringe (2) having a syringe barrel (4) with a plunger (6) slidable within the barrel and a hollow needle (8) extending from the barrel through which needle the liquid sample is drawn into the syringe barrel **characterised in that** a solid phase material (10, 11, 13) is provided in the syringe barrel (4) to be contacted by the liquid sample drawn into the syringe (2).

6. An apparatus according to claim 5 wherein the solid phase material is provided as a porous plug (10) inside the syringe barrel (4).

7. An apparatus according to claim 5 wherein the solid phase material is provided as a coating (11) on the inside of the syringe barrel wall.

8. An apparatus according to claim 5 wherein the solid phase material is provided as a coating on a filter (13) provided inside the syringe barrel (4).

9. An apparatus according to any of claims 5 to 8 wherein the solid phase material (10, 11, 13) is made of a solid polymer.

10. An apparatus according to any of claims 5 to 8 wherein the solid phase material (10, 11, 13) is made of a liquid polymer.

## Patentansprüche

1. Verfahren zur Durchführung einer Probenvorbereitung einer flüssigen Probe unter Verwendung einer Festphasenmikroextraktion, umfassend die Schritte:
- Ziehen einer flüssigen Probe, die Analyten umfasst, in eine Spritze (2), die einen Spritzenzylinder (4) aufweist, der mit einem Festphasenmaterial (10) bereitgestellt ist,
- Leiten der flüssigen Probe durch das Festphasenmaterial (10), derart, dass die Analyten in der Probe an das Festphasenmaterial adsorbiert werden, und
- Eluieren der Analyten mit einem flüssigen Lösungsmittel direkt in den Injektor (22) eines Analysegeräts (20).

2. Verfahren nach Anspruch 1, wobei die Probe unter Verwendung eines Autosamplers (12) in die Spritze (2) gezogen wird.

3. Verfahren nach Anspruch 1, wobei das Festphasenmaterial (10) vor dem Elutionsschritt gewaschen wird.

4. Verfahren nach Anspruch 1, wobei die Analyten mit einem organischen Lösungsmittel eluiert werden.

5. Vorrichtung zur Durchführung einer Probenvorbereitung einer flüssigen Probe unter Verwendung einer Festphasenmikroextraktion, umfassend eine Spritze (2), die einen Spritzenzylinder (4) mit einem in dem Zylinder gleitfähigen Kolben (6) und eine sich von dem Zylinder erstreckende Hohlnadel (8) aufweist, wobei durch die Nadel die flüssige Probe in den Spritzenzylinder gezogen wird, **dadurch gekennzeichnet, dass** ein Festphasenmaterial (10, 11, 13) in dem Spritzenzylinder (4) für einen Kontakt mit der in die Spritze (2) gezogenen flüssigen Probe bereitgestellt ist.

6. Vorrichtung nach Anspruch 5, wobei das Festphasenmaterial im Inneren des Spritzenzylinders (4) als ein poröser Pfropfen (10) bereitgestellt ist.

7. Vorrichtung nach Anspruch 5, wobei das Festphasenmaterial als eine Beschichtung (11) auf der Innenseite der Spritzenzylinderwand bereitgestellt ist.

8. Vorrichtung nach Anspruch 5, wobei das Festphasenmaterial als eine Beschichtung auf einem im Inneren des Spritzenzylinders (4) bereitgestellten Filter (13) bereitgestellt ist.

9. Vorrichtung nach einem der Ansprüche 5 bis 8, wobei das Festphasenmaterial (10, 11, 13) aus einem festen Polymer hergestellt ist.

10. Vorrichtung nach einem der Ansprüche 5 bis 8, wobei das Festphasenmaterial (10, 11, 13) aus einem flüssigen Polymer hergestellt ist.

## Revendications

1. Méthode d'échantillonnage d'un échantillon liquide utilisant la microextraction en phase solide comprenant les étapes de :
- aspirer un échantillon liquide comprenant des substances à analyser dans une seringue (2) ayant un cylindre (4) contenant un matériau en phase solide (10),
- faire passer l'échantillon liquide à travers le matériau en phase solide (10) de telle sorte que les substances à analyser dans l'échantillon soient adsorbées sur le matériau en phase solide ; et
- éluer les substances à analyser avec un solvant liquide directement dans l'injecteur (22) d'un instrument d'analyse (20).

2. Méthode selon la revendication 1, dans laquelle l'échantillon est aspiré dans la seringue (2) en utilisant un autoéchantillonneur (12).

3. Méthode selon la revendication 1, dans laquelle le matériau en phase solide (10) est lavé avant l'étape d'élution.

4. Méthode selon la revendication 1, dans laquelle les substances à analyser sont éluées avec un solvant organique.

5. Appareil pour échantillonner un échantillon liquide utilisant de la microextraction en phase solide comprenant une seringue (2) ayant un cylindre (4) de seringue avec un piston (6) qui peut coulisser à l'intérieur du cylindre et une aiguille creuse (8) dans le prolongement du cylindre à travers laquelle aiguille l'échantillon liquide est aspiré dans le cylindre de la seringue, **caractérisé en ce qu'**il y a un matériau en phase solide (10, 11, 13) dans le cylindre (4) de la seringue à mettre en contact avec l'échantillon liquide aspiré dans la seringue (2).

6. Appareil selon la revendication 5 dans lequel le matériau en phase solide se présente sous la forme d'un bouchon poreux (10) à l'intérieur du cylindre (4) de la seringue.

7. Appareil selon la revendication 5 dans lequel le matériau en phase solide se présente sous la forme d'un revêtement (11) sur l'intérieur de la paroi du cylindre de la seringue.

8. Appareil selon la revendication 5 dans lequel le matériau en phase solide se présente sous la forme d'un revêtement sur un filtre (13) qui est à l'intérieur du cylindre (4) de la seringue.

9. Appareil selon l'une quelconque des revendications 5 à 8 dans lequel le matériau en phase solide (10, 11, 13) est fait d'un polymère solide.

10. Appareil selon l'une quelconque des revendications 5 à 8 dans lequel le matériau en phase solide (10, 11, 13) est fait d'un polymère liquide.
